# EUROPEAN PATENT APPLICATION

(11) **EP 2 114 042 A1**
(43) Date of publication of application: **04.11.2009**
(21) Application number: 08008249.8
(22) Date of filing: 30.04.2008
(51) Int. Cl.: H04L 12/56, H04L 12/28

(54) **Base station authentication for self-organising networks**

(71) Applicant: Nokia Siemens Networks Oy, 02610 Espoo (FI)
(72) Inventor: Luo, Jijun, 81549 München (DE); Schulz, Egon, Dr., 80993 München (DE)
(74) Representative: Bruglachner, Thomas E.

(57) **Abstract**

An authentication of a base station in a wireless network enabling a self-organising of a network is described, in which an operator device identity module is used for providing network specific and user specific information to the base station, which information allows for a personalised operation of the base station.

## Description

### Technical field of the invention

The present invention relates to the technical field of communication networks. In particular, the present invention relates to a personalised operator device identity module for a base station enabling a self-organising network, a wireless base station, a self-organising network, a method for authentication of a base station, a program element and a computer-readable medium.

### Background of the invention

Future networks may experience more dynamic topologies and heterogeneity. In addition, an increasing demand of the traffic may result in a need for more network elements to be added into the existing network infrastructure for network migration towards a capacity enhancement, a capability enlargement as well as a coverage extension. This may require that the network itself is programmable and easily extensible by adding plug and play network elements. Such a network may be based on the approach of a self-organisation, and may therefore be termed as a Self-Organising Network (SON).

Self-organising networks and a concept for plug and play base stations is a major topic of recent research. In Jijun Luo et al., Feasibility study of the dynamic network planning and management in an End to End Reconfiguration (E2R), WWRF, 26-27, Feb., 2004, Peking, China a dynamic network planning and flexible management concept for a future network is proposed. In 3GPP TS 36.420, E-UTRAN X2 general aspects and principles, V8, 12. 2007 some interbase station signalling is disclosed.

However, no features supporting a self-organisation of networks are disclosed.

Self-organising networks are systems which comprise independent interacting entities which often act on simple rules. These systems have no strong external control. Therefore, the systems may exhibit malicious behaviour. It is generally not obvious how such a system as a whole behaves in case a plug and play Base Station (BS) element is not being authorized properly.

On the other hand, it is not obvious how to define the rules of the entities in order to achieve a desired behaviour. In that context, the plug and play base stations deployed by the operator or even by a multitude of operators or by an end user a subscriber of the operator have to follow a standardized administration approach. When the use of self-organising network base stations (SON BS) is not properly authenticated and the radio capabilities are not properly controlled, a potential misuse of an unauthenticated base station and a misbehaviour of the base station is likely to occur.

### Summary of the invention

There may therefore be a need for a base station authentication enabling a self-organising network in a simple and yet effective manner.

The present invention provides for an Operator Device Identity Module (ODIM) for a base station in a wireless network, a base station, a self-organising network, a method, a program element and a computer-readable medium according to the features of the independent claims.

According to an exemplary embodiment of the present invention, an Operator Device Identity Module (ODIM) for a base station in a wireless network enabling a self-organisation of the network is provided, the module comprising a data storage unit for storing network specific information and for storing user specific information which allows for a secure and authenticated operation of the base station.

Furthermore, according to another exemplary embodiment of the present invention, the module is adapted as a personalised module which allows for a provision of a personalised operation of the base station.

In other words, a module is provided which can for example be programmed for each individual user (i.e. an operator or an end user). The module may be connected to a base station, thus enabling a faultless operation of the base station according to user specific demands.

The Operator Device Identity Module may thus facilitate a plug and play feature of the self-organising base station. The ODIM module may be configured and accessed by a mobile operator or even by the end user to guarantee the operation of the SON BS in a safe and faultless manner.

The module allows for the standardisation of administration procedures of the SON BS and for a control of the standards, communication parameters and operation spectrum.

According to another exemplary embodiment of the present invention, the module further comprises a first interface for configuration of the module by an operator or end user.

According to another exemplary embodiment of the present invention, the module is adapted for a remote configuration by the operator.

Thus, individualisation of the module may be remotely carried out without the need of accessing the base station.

According to another exemplary embodiment of the present invention, the module further comprises a second interface for connection of the module to the base station, wherein the first interface for configuration of the module by the operator and the second interface for connection of the module to the base station are standardised, such that the module is usable for different base stations.

The placement (corresponding to a slot on board in the BS) of the ODIM in the BS and the interface for the operator to configure the base station operation may be standardised in order to allow for a connection of the module to different base stations.

According to another exemplary embodiment of the present invention, the module data storage unit comprises at least one of a serial number of the module, an identification of the operator or of the operators, a PIN for authentication between the BS and the network to be accessed, a super-user PIN for authentication between the operator or an advanced user and the base station, capabilities of the base station or the interface for holding the capabilities offered by the SON BS device (for example Radio Access Technology (RAT) indication), broadcasting information composition control module controlling the broadcasting information expected to be received by the User Equipment or user terminal (UE), for example for a PLMN network name.

Furthermore, the data storage unit may, alternatively or additionally, comprise an information relating to priorities of the communications paths to an existing network, for example a wireless interface direct to a neighbour base station, and/or a backhaul connectivity feature, for example the existence of a connectivity with a core network and a link capacity.

Furthermore, according to another exemplary embodiment of the present invention, the module comprises an extendable field for an implementation of new features. The extendable field may be adapted in form of a memory, a part of the data storage unit or an integrated circuit.

According to another exemplary embodiment of the present invention, the module is configured for controlling a limitation of a functionality of the base station.

For example, not all functions may be exploitable if the operator programs the ODIM accordingly. Furthermore, not all functions may be exploitable during a programming procedure by the operator.

The ODIM may, for example, firstly be configured by the operator of a corresponding (permitted) radio access technology to be operated. Then the ODIM adjusts according to the environment in which other base stations are already in operation.

According to another exemplary embodiment of the present invention, the module is adapted to be used by multiple operators, wherein individual network specific information and user specific information is provided for each of the multiple operators.

Thus, a multi-operator network element sharing (i.e. an infrastructure sharing) in which multiple operators share for example a single site may be provided. For example, when a first user uses the module, he provides personal access data (for example in form of a personal super PIN) to the base station. Thus, the module and the base station can identify the user and the module can provide the corresponding information to the base station. On the other hand, if a second user uses the module, he provides his (different) individual access data to the base station, in which case the second user can be identified and corresponding (different) information can be provided to the base station by the module.

According to another exemplary embodiment of the present invention, the module is adapted for being remotely updated. Such an update process may for example be performed by the OMC.

According to another exemplary embodiment of the present invention, a wireless base station enabling a self-organising network is provided, the wireless base station comprising an Operator Device Identity Module which has been described above.

According to another exemplary embodiment of the present invention, the base station is adapted for being operated after a power booting if a super-user PIN which has been provided by the operator or end user is valid.

In other words, the base station cannot be operated if the super-user PIN is not valid directly after power booting.

According to another exemplary embodiment of the present invention, the base station is adapted for being operated after a reboot if a PIN which has been provided by the operator, super-user or end user is valid.

In other words, after booting and in case the base station has already been in operation for a while, only a PIN is necessary for rebooting or for example power-off. Such PIN may be asked for by the OMC.

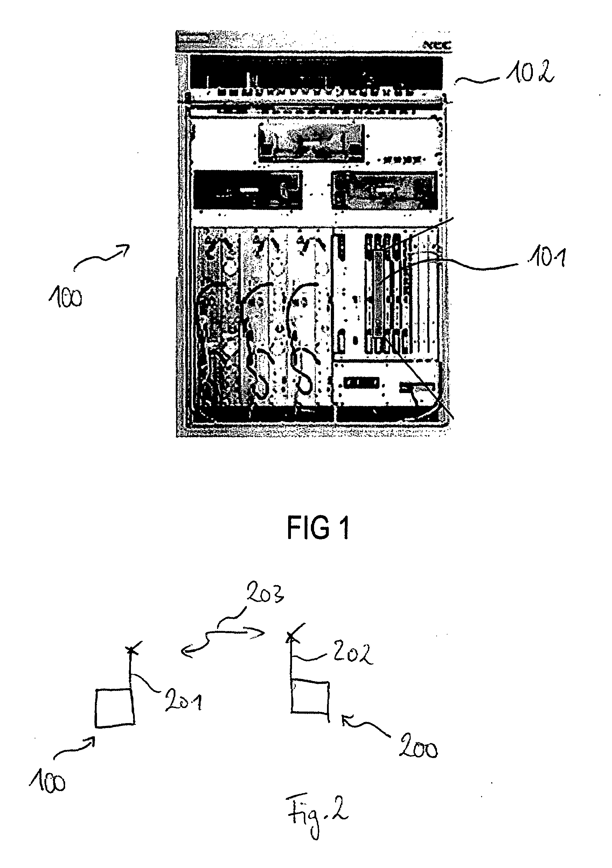

The authentication of the use of the ODIM (for example between a super-user/operator and the SON BS) and the authentication of the operation of the base station (between the SON BS and the OMC) procedure are explained below with respect to Figs. 1 to 6.

The embodiments described with respect to Figs. 1 to 6 focus particularly on the authentication, the BS capability control and multi-operator cases.

According to another exemplary embodiment of the present invention, the base station is adapted for identifying a colour code of the operator using a public key of the operator.

According to another exemplary embodiment of the present invention, a self-organising network is provided, which comprises an Operator Device Identity Module as described above, a base station as described above and an Operations and Maintenance Centre (OMC).

According to another exemplary embodiment of the present invention, a method for authentication of a base station in a wireless network enabling a self-organisation of the network is provided, in which an Operator Device Identity Module is connected to a base station. Furthermore, an operator provides his personal access data to the base station. Still further, the module provides network specific information and user (operator) specific information which allows for a personalised operation of the base station.

The term "connection to the base station" may refer to a physical procedure in which a galvanic contact between the corresponding ODIM and BS interfaces is established (e.g. by putting the ODIM in the corresponding slot of the BS). Furthermore, this term may refer to the establishment of a data transmission between the ODIM and the BS which may be controlled by a software. In the second case, the ODIM is already placed in the slot and then the connection is established.

According to another exemplary embodiment of the present invention, a program element for authentication of a base station enabling a self-organising network is provided, which program element, when being executed by a processor, is adapted to carry out the above-mentioned method steps.

According to another exemplary embodiment of the present invention, a computer-readable medium on which a program element is stored is provided. The program element, when being executed by a processor, is adapted to carry out the above-mentioned method steps.

The program element may be stored on a computing unit, which may also be part of an embodiment of the present invention. This computing unit may be adapted to perform or induce the performing of the steps of the method described above. Moreover, it may be adapted to operate the components of the above-described base station.

The embodiments of the invention cover both a computer program that right from the beginning uses the invention, and a computer program or program element that by means of an update turns an existing program into a program that uses the invention.

Further on, another exemplary embodiment of the present invention may be a medium for making a computer program element available for downloading, which computer program element is adapted to perform the method according to one of the above embodiments.

It should be noted that the following described exemplary embodiments of the invention apply for the ODIM, the complete self-organising network, the method, the computer-readable medium and the program element, even if some of them may be described with respect to only one or some of the above-mentioned subject-matters of the invention.

These and other aspects of the present invention will become apparent from and elucidated with reference to the embodiments described hereinafter.

Exemplary embodiments of the present invention will now be described in the following, with reference to the following drawings.

### Brief description of the drawings

Fig. 1 shows a schematic representation of a plug and play base station for a self-organising network, comprising an ODIM, according to an exemplary embodiment of the present invention.
Fig. 2 shows a schematic representation of a self-organising network according to an exemplary embodiment of the present invention.
Fig. 3 shows a basic signalling and procedure for a plug and play base station authentication according to an exemplary embodiment of the present invention.
Fig. 4 shows a schematic representation of a control of a SON BS capability by an ODIM according to an exemplary embodiment of the present invention.
Fig. 5 shows a schematic representation of a composite ODIM according to an exemplary embodiment of the present invention.
Fig. 6 shows a flow-chart of an exemplary method according to the present invention.

Detailed description of exemplary embodiments

The illustration in the drawings is schematically. In different drawings, similar or identical elements are provided with the same reference numerals.

Fig. 1 shows a schematic representation of a device 100 comprising a SON BS 102 and an operator device identification module (ODIM) 101 according to an exemplary embodiment of the present invention.

As can be seen from Fig. 1, the ODIM 101 may be inserted in a slot provided in the SON BS 102. For example, the ODIM 101 may be adapted in form of a card comprising an integrated circuit. The module may be preconfigured by an operator and may comprise parameters which make sure that the base station 102 can be operated in a faultless and safe manner according to specific user needs.

When starting the operation of the base station 102, the user simply needs to put the module 101 into the corresponding slot of the base station 102 (which slot comprises an interface for connecting the module to the base station). After that the base station starts operation automatically. In a second step, the user needs to input his personal identification number or his super PIN (or both the PIN and super PIN).

After the user has input his PIN and/or super PIN, the ODIM 101 provides user specific and network specific information to the base station for ensuring a proper operation of the BS.

All important information may be stored on the ODIM 101.

This may result in an enhanced flexibility, since the ODIM 102 can be easily be programmed by the operator or the super user and comprises all important information for operation of the base station 102.

Fig. 2 shows a schematic representation of a self-organising network comprising a device 100 including a base station 102 and an ODIM 101. Furthermore, the device 100 comprises an antenna 201 for a wireless communication over the communication path 203.

The network further comprises an OMC 200 which also has an antenna 202 for wireless communication.

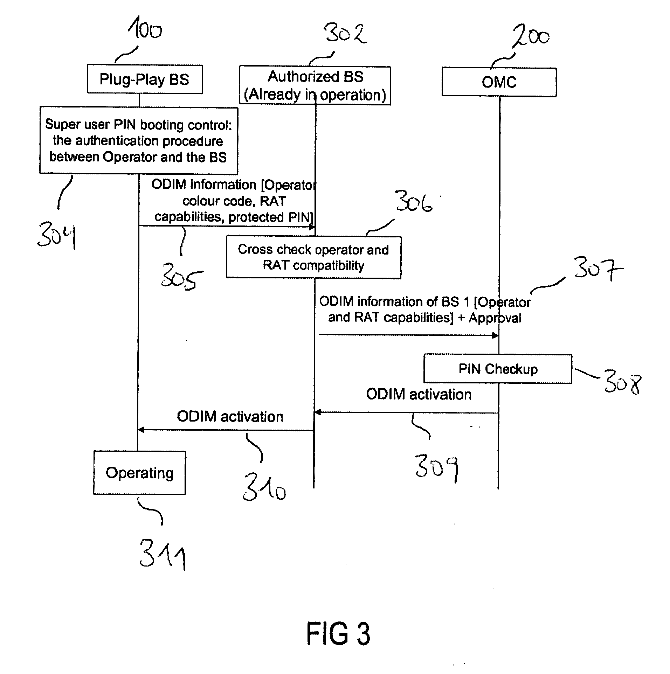

Fig. 3 shows a basic signalling and procedure for a plug and play BS authentication through a BS-BS interface (for example X2 in Long Term Evolution (LTE)).

In a first step, the operator provides a super-user PIN to the plug and play base station 100 (which comprises the ODIM) for booting control (reference numeral 304). This provides an authentication procedure between the operator and the base station.

After that, in step 305, user and network specific information (which has been transferred from the ODIM to the base station 100 before) is transmitted to an authorized base station 302 which is already in operation. The message 305 between the plug and play base station 100 and the authorized base station 302 comprises an operator colour code, RAT capabilities and a protected PIN. The operator colour code is a coded message of the operator information.

Other base stations who are already in operation may not be able to decode the protected PIN. The reason to protect the PIN is to avoid a misbehaviour of those base stations who are already in operation. A transmission of the protected PIN to base stations which are already in operation may be performed by letting the SON BS 100 receive one or more challenging messages from the operating base stations 302 or the OMC centre 200. The PIN is then used to operate on the challenging message. The operating base station 302 then forwards the coded challenging message to the OMC 200 which holds an executive controlling function. The challenging message is known by the OMC 200 in advance in order to authenticate the SON BS 100.

The operator colour code is generated by the PIN and the operator identification using for example a harsh-function operation. Since the PIN is only known by the operator and the ODIM, a regeneration of the operator colour code may not be possible by any other entity which is not aware of the PIN. However, the base station in operation 302(or even multiple base stations in operation) may still identify the correctness of the operator colour code using the operator's public key.

In step 306 the authorized base station 302 crosschecks the operator and RAT compatibility.

Then, in step 307, the ODIM information of the plug and play base station 100 (in particular the operator and RAT capabilities) is transmitted to the OMC 200, together with an approval generated by the authorized BS in operation 302.

In step 308 a PIN check-up is performed by the OMC 200. Then, in step 309, ODIM activation information is transmitted from the OMC 200 to the authorized base station 302.

After that, in step 311, the ODIM activation information is transmitted from the authorized base station 302 to the plug and play base station 100, after which the plug and play base station 100 can start proper operation (step 311).

The super-user PIN may only be used at a time, when the SON BS 100 starts to operate for a new SON BS user. To allow the SON BS work permanently even after an occasional power-off, no super-user PIN has to be provided to the base station.

Below, a general purpose base station and its function limitation is described in greater detail.

A general purpose base station is able to be reconfigured to behave according to different radio access technologies. Profiles of the potential RAT may, according to an exemplary embodiment of the present invention, be programmed in the ODIM before the base station is released for operation.

An OMC or super-user which has a remote control right may remotely reconfigure the ODIM control unit. That may allow the base station to be reconfigured to behave according to a different standard or according to different parameters. The process may be used for network migration or an end-to-end reconfigurability between groups of reconfigurable user equipments and network elements.

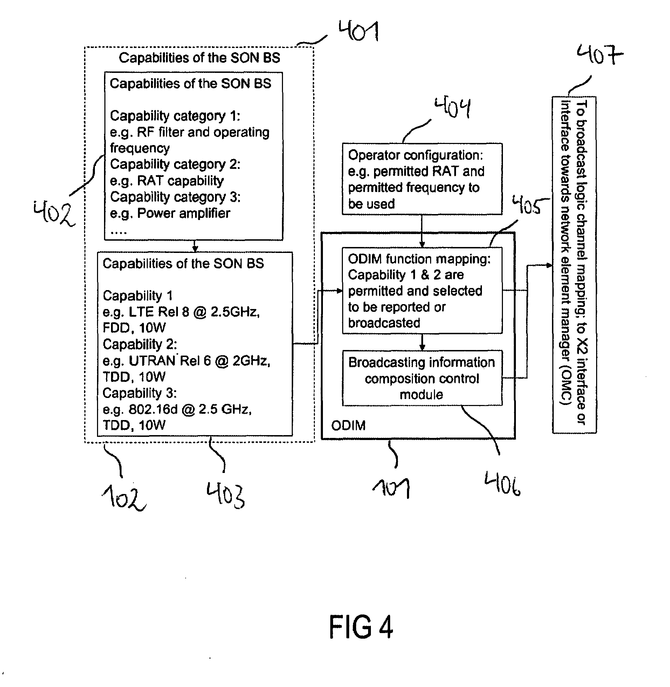

Fig. 4 shows a schematic representation of the control of SON BS capability by an ODIM according to an exemplary embodiment of the present invention. Box 401 shows a SON BS with its corresponding capabilities. For example, three (or more) categories may be provided. A first capability category refers to the radio frequency (RF) filter and the corresponding operating frequency. A second capability category refers to the RAT capability and a third capability category refers to the power amplifier (see box 402).

The combination of the capabilities in the basic categories may assemble the overall capability of the BS in terms of the RAT. For example, the SON BS may have the following capabilities according to the given basic capability category from box 402(see box 403):
Capability 1: LTE Rel 8 at 2.5 GHz, FDD, 10 W.
Capability 2: UTRAN Rel 6 at 2 GHz, TDD, 10 W.
Capability 3: 802.16d at 2.5 GHz, TDD, 10 W.

TDD stands for time-division duplex, UTRAN for UMTS Terrestrial Radio Access Network, W for The electric power (Watt).

As may be seen from box 404, the operator configures the ODIM by setting the operational parameters. For example, the operator is allowed to operate certain RATs (a list of RATs) and operate the RAT in a certain frequency determined by the regulator.

In box 405 an ODIM function mapping is performed. For example, capabilities 1 and 2 are both supported by the BS and thus permitted, so that they are selected and reported or broadcasted. It should be noted, that on one hand the operator transmits information to the ODIM during configuration. On the other hand, information regarding the SON BS capabilities have been transferred from the SON BS to the ODIM before the ODIM function mapping 405 is performed.

Then, in step 406, the information is transferred to a broadcasting information composition control module of the ODIM 101.

ODIM function mapping information and broadcasting information are used for broadcast logic channel mapping and transmitted to an X2 interface or an interface towards the OMC or network element manager (see box 407).

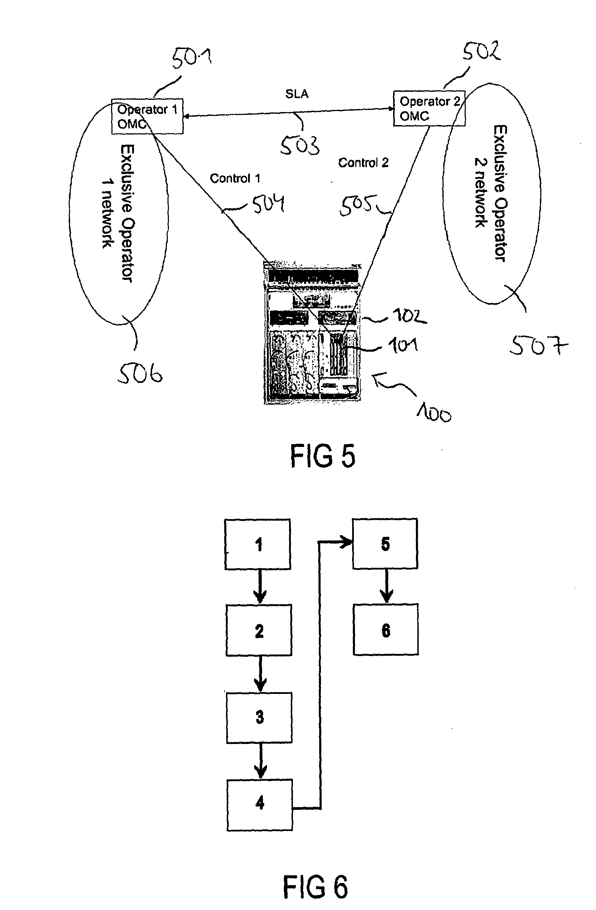

Fig. 5 shows a schematic representation of a composite ODIM 101 connected to a BS 102.

Such an ODIM may be used for multi-operator network elements sharing. For example two (or more) operators 501, 502 can share the same plug and play base station 102. The ODIM 101 is a composite ODIM that can be accessed by both operators 501, 502.

The composite ODIM works as a coupling point between the two operators and is adapted to find an optimal configuration of both operator networks 506, 507. The ODIM matches the operator demand and the broadcasting information for both operators to the user equipments or user terminals (UEs).

Both operators 501, 502 can control the ODIM by communication paths 504, 505, respectively. Furthermore, both operators or OMCs 501, 502 can communicate with each other over communication paths 503 (Shared Line Appearance, SLA).

Fig. 6 shows a flow-chart of an exemplary embodiment of the present invention. In step 1, an ODIM is connected/inserted/associated (in)to a base station. In step 2, a super PIN is provided to the base station by a super-user or operator. In step 3, the validity of the super PIN is checked by the OMC. In step 4, the module provides network and user specific information to the base station, thus allowing for a personalised operation of the base station. In step 5, after the base station has started operation, an update of the ODIM is performed by an operator of the OMC. After the update, the user has to provide his PIN to the base station (step 6).

The invention may provide for a secure and safe operation of the SON BS. Furthermore, the invention may provide for a separation of the manufacture and control by introducing the ODIM module. Furthermore, a flexible configuration of the base station may be possible and a multi-operator operation of the SON BS may be possible.

It should be noted that the term "comprising" does not exclude other elements or steps and the "a" or "an" does not exclude a plurality. Also elements described in association with different embodiments may be combined.

It should also be noted that reference signs in the claims shall not be construed as limiting the scope of the claims.

## Claims

1. A Operator Device Identity Module for a base station in a wireless network enabling a self-organisation of the network, the module comprising:
a data storage unit for storing network specific information and user specific information which allows for a secure and authenticated operation of the base station.

2. The module of claim 1, wherein the module is adapted as a personalised Operator Device Identity Module, and wherein the stored information allows for a personalised operation of the base station.

3. The module of one of claims 1 and 2, further comprising:
a first interface for configuration of the module by an operator.

4. The module of one of the preceding claims, wherein the module is adapted for a remote configuration by the operator.

5. The module of one of the preceding claims, further comprising:
a second interface for connection of the module to the base station;
wherein the first interface for configuration of the module by the operator and the second interface are standardised, such that the module is usable for different base stations.

6. The module of one of the preceding claims,
wherein the data storage unit comprises at least one of the following information:
a serial number of the module;
an identification of the operator;
a personal identification number (PIN) for authentication between the BS and network that is inserted;
a super user PIN for authentication between the operator or an advanced user and the base station;
capabilities of the base station or the second interface for holding the capabilities offered by the base station;
broadcasting information composition control module controlling the broadcasting information expected to be received by the UE;
priorities of communications paths to an existing network;
a backhaul connectivity feature.

7. The module of one of the preceding claims, further comprising an extendable field for an implementation of new features.

8. The module of one of the preceding claims,
wherein the module is configured for controlling a limitation of a functionality of the base station.

9. The module of one of the preceding claims,
wherein the module is adapted to be used by multiple operators;
wherein individual network and user specific information is provided for each of the multiple operators.

10. The module of one of the preceding claims,
wherein the module is adapted for being remotely updated.

11. A wireless base station enabling a self-organising network, the wireless base station comprising an Operator Device Identity Module of one of claims 1 to 10.

12. The base station of claim 11,
wherein the base station is adapted for being operated after a power booting if a super user PIN which has been provided by the operator is valid.

13. The base station of one of claims 11 and 12,
wherein the base station is adapted for being operated after a reboot if a PIN which has been provided by the operator is valid.

14. The base station of one of claims 11 to 13,
wherein the base station is adapted for identifying a colour code of the operator using a public key of the operator.

15. A self-organising network, comprising:
an Operator Device Identity Module of one of claims 1 to 10;
a base station of one of claims 11 to 14; and
an operations and maintenance centre.

16. A method for authentication of a base station in a wireless network enabling a self-organising of the network, the method comprising the steps of:
connecting an Operator Device Identity Module of one of claims 1 to 10 to a base station;
providing, by an operator, personal access data to the base station;
providing, by the module, network specific information and user specific information to the base station, which information allows for a personalised operation of the base station.

17. A program element for authentication of a base station enabling a self-organising network, which program element, when being executed by a processor, is adapted to carry out the method of claim 16.

18. A computer-readable medium on which a program element is stored, which program element, when being executed by a processor, is adapted to carry out the method of claim 16.
